# EUROPEAN PATENT APPLICATION

(11) **EP 0 567 043 A1**
(43) Date of publication of application: **27.10.1993**
(21) Application number: 93106317.6
(22) Date of filing: 19.04.1993
(51) Int. Cl.: B23Q 1/18, B23Q 39/04

(54) **Movable machining unit with three spindles which can work the workpiece to be machined along three orthogonal axes**

(30) Priority: 22.04.1992 IT BO920145
(71) Applicant: INDUSTRIA MACCHINE FAENZA I.M.F. S.p.A., I-48018 Faenza (Ranenna) (IT)
(72) Inventor: Ferruzzi, Claudio, I-48018 Faenza (Ravenna) (IT)
(74) Representative: Modiano, Guido, Dr.-Ing.

(57) **Abstract**

Machining unit comprising a first slider (10) guided on a base (1,5) in a horizontal direction X; a second slider (34) guided on the first slider (10) in a horizontal direction Y orthogonal to the direction X; a third slider (54) guided on the second slider (34) in a vertical direction Z orthogonal to the directions X and Y; means (49,64,65) for mounting tools (63,68,69) on the third slider (54) and means (12,42,55) for positioning said sliders (10,34,54) and causing the advancement of said tools (63,68,69) along the directions X, Y and Z during operating steps.

## Description

The present invention relates to a movable machining unit with three spindles which can machine the workpiece along three orthogonal axes. The unit is particularly suitable to manufacture so-called "transfer" machines, in which the workpieces are subjected to successive multiple machining operations.

The aim of the present invention is to provide a machining unit which allows to act on the workpiece along three orthogonal directions quickly and with high precision. Within the scope of this aim, an object of the present invention is to provide a machining unit having a modest bulk for manufacturing "transfer" machines, particularly of the circular type.

This aim and this object are achieved by a machining unit characterized in that it comprises: a first slider, guided on a base in a horizontal direction X; a second slider, guided on said first slider in a horizontal direction Y which is orthogonal to said direction X; and a third slider, guided on said second slider in a vertical direction Z which is orthogonal to said directions X and Y; means for mounting tools on said third slider; and means for positioning said sliders and causing the advancement of said tools along said directions X, Y and Z during operating steps.

Further characteristics and advantages of the machining unit according to the present invention will become apparent from the following description of a preferred embodiment, illustrated only by way of non-limitative example in the accompanying drawings, wherein:
figure 1 is a side view of a "transfer" machine on which a plurality of machining units according to the invention are installed;
figure 2 is a plan view of the machine of figure 1;
figure 3 is a plan view of the first slider;
figure 4 is a sectional view of the first slider, taken along a vertical plane orientated along direction X;
figure 5 is a partially sectional view of the first slider, taken along a vertical plane orientated along direction Z.

With reference to the above figures, the machine comprises a base 1 at the center of which there is a workpiece-holder turret 2 rotatable about the vertical axis A.

In the illustrated embodiment, the turret is provided with six hydraulic clamps 3 for locking the workpieces; the clamps are angularly mutually offset by 60^{o} around the axis A. The turret 2 is jogged so as to move through 60^{o} angular shifts, allowing a workpiece to assume successive positions for performing the intended machining operations. The means for the actuation of the turret and of the clamps are not shown in the drawing, since they are fully conventional in their construction.

At the stop positions of the clamps 3 it is possible to arrange an equal number of machining units, each of which has the purpose of performing a given machining operation.

Four machining units 4 are provided in the illustrated machine; they are arranged in diametrically opposite positions with respect to the axis A and are aligned along two lines defining oppositely arranged angles of 60^{o}.

The units 4 are constructively mutually identical, so reference to only one of them is made in the continuation of the description.

Each unit 4 comprises a plate 5 fixed on the upper surface of the base, with a spacer block interposed so that it is raised with respect to said surface.

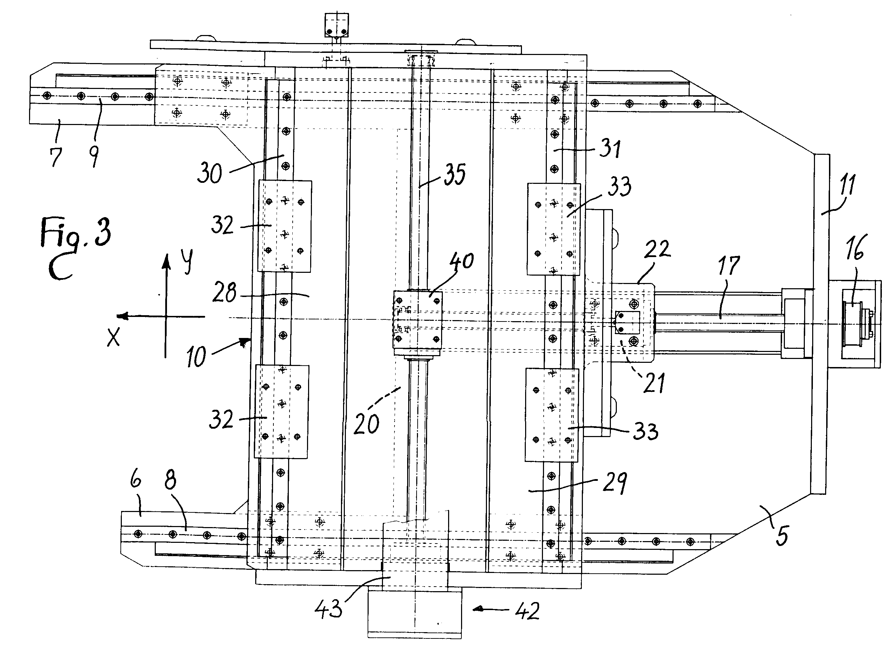

Two mutually parallel strips 8 and 9 are fixed on two sides of the plate 5 which extend so as to form two arms 6 and 7 (figure 3); said strips act as a guide for a first slider, generally designated by the reference numeral 10. The strips 8 and 9 are orientated so that the slider 10 can slide in the horizontal direction X which intersects the vertical axis A.

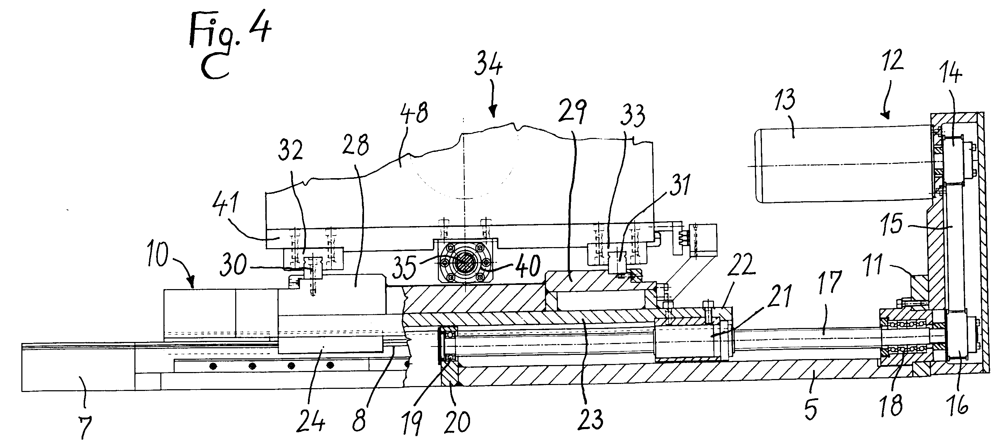

A shoulder 11 rises from the side of the plate 5 which is opposite to the arms 6 and 7, and a drive unit 12 is mounted on said shoulder (figure 4). The drive unit comprises an electric motor 13 supporting a toothed pulley 14 which is keyed on its output shaft. A toothed belt 15 winds around said toothed pulley 14 and is closed in a loop around a second toothed pulley 16. The pulley 16 is rotationally rigidly coupled to the end of a threaded rod 17 which is rotatably supported, by means of bearings 18 and 19, in the shoulder 11 and in the rib 20 which is fixed on the side of the plate 5 which extends between the arms 6 and 7.

The threaded rod 17 rotatably engages a nut thread 21, for example of the ballscrew type, fixed below a bracket 22 of the plate 23 of the slider 10.

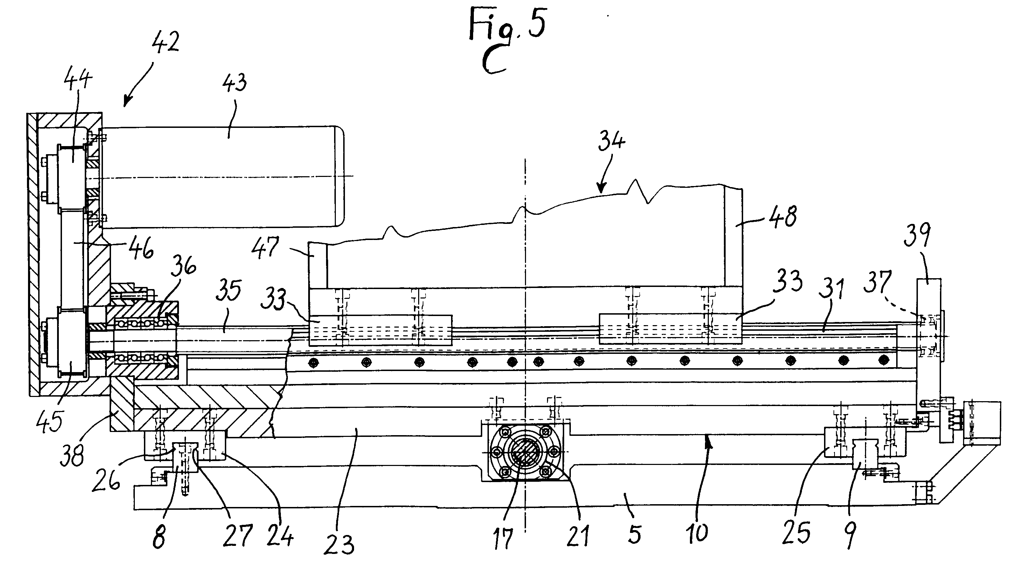

Two pairs of skids 24 and 25 (figure 5) are arranged below the plate 23 on its sides, and can slide on the strips 8 and 9. Sliding seats for the strips 6 and 7 are defined in the skids 24 and 25; oppositely arranged ridges 26 protrude from said seats and, by engaging respective grooves 27 of the strips, provide sliding retention of the slider 10 on the plate 5.

From what has been described it is evident that, actuating the motor 13 in one direction or the other, the slider 10 moves forwards toward the axis A or backwards along the axis X.

Two ridges 28 and 29 (figure 4) are arranged on the plate 23 of the slider 10, and two strips 30 and 31 (figure 3) are fixed on said ridges; the strips 30 and 31 are mutually parallel and are perpendicular to the axis X. A second slider 34 is guided on the strips 30 and 31 by means of skids 32 and 33, and can thus slide along a horizontal direction Y (figure 3) at right angles to the axis X.

The slider 34 can move by means of a threaded rod 35, the opposite ends whereof are rotatably supported, by means of the bearings 36 and 37, in two ribs 38 and 39 fixed to the opposite sides of the plate 23.

The rod 35 engages a nut thread 40 fixed below the plate 41, which constitutes the base of the slider 34. The rod 35 (figure 5) can be rotated in one direction or the other by a drive unit 42 which is applied to the rib 38 and is fully identical to the one provided for the actuation of the slider 10. Said drive unit, too, in fact comprises an electric motor 43, two toothed pulleys 44 and 45 keyed on the shaft of the electric motor 43 and on the rod 35, and a driving belt 46.

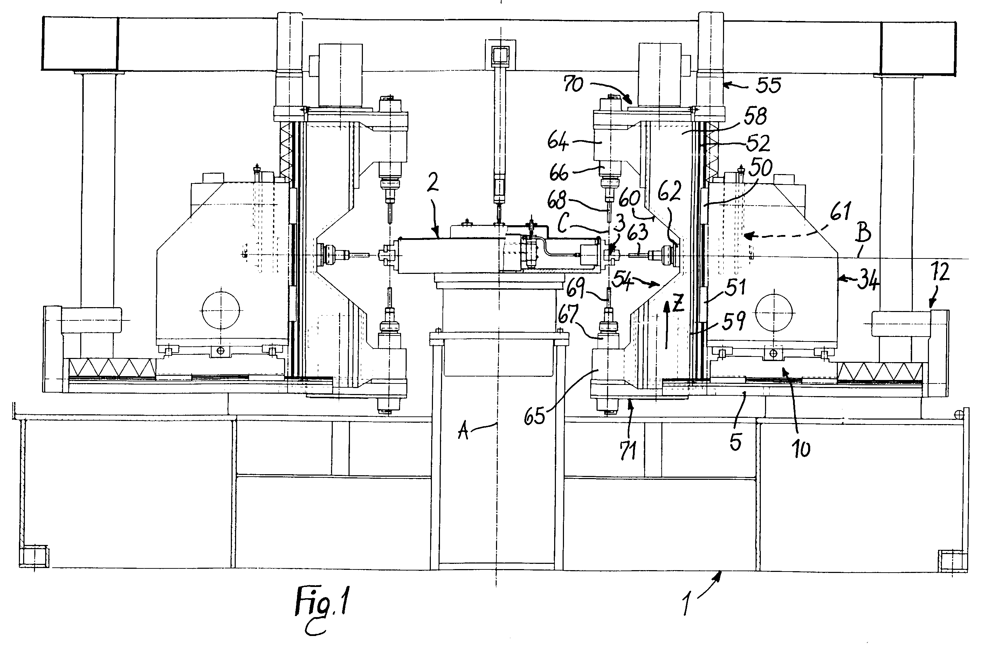

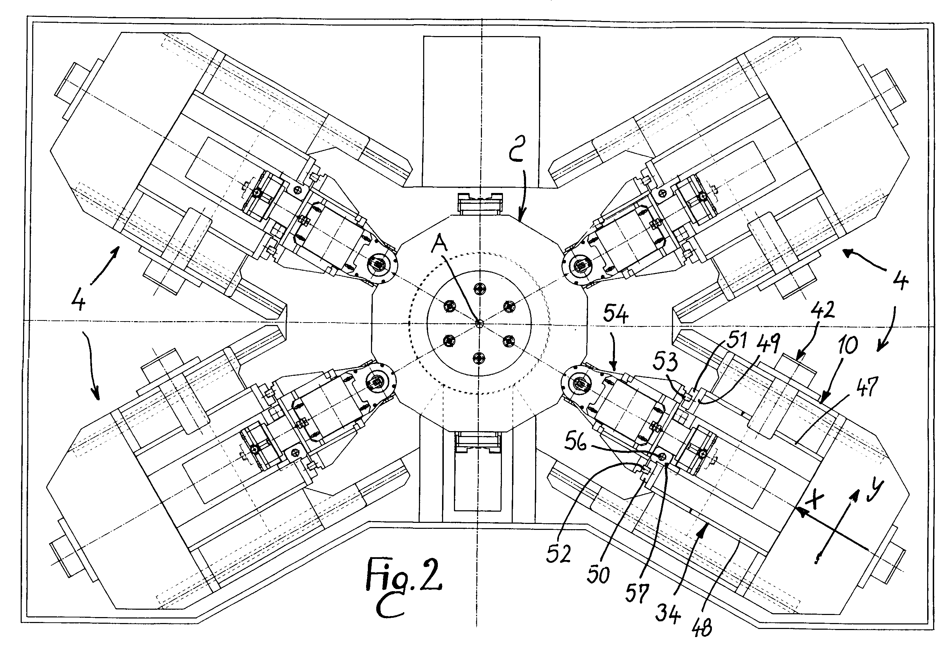

The slider 34 comprises two vertical sides 47 and 48 rising from the sides of the plate 41 which are parallel to direction X. A wall 49 (figure 2) extends between the edges of the sides 47 and 48 which are directed towards the axis A; said wall 49 is provided, in a front position, with two pairs of skids 50 and 51 slidably engaged by two strips 52 and 53 which are rigidly coupled to a third slider, generally designated by the reference numeral 54 (figures 1 and 2). The strips 52 and 53 are vertical, so that the slider can slide in a vertical direction Z at right angles to the directions X and Y of the sliders 10 and 34.

The slider 54 can be actuated vertically by means of a drive unit which is constructively similar to those actuating the sliders 10 and 34 and comprises a motor unit 55, installed on the slider 54, actuating a threaded rod 56 which is supported on said slider parallel to the strips 52 and 53 and engaging a nut thread 57 fixed to the slider 34 in a front position with respect to the wall 49 proximate to the strip 52.

The slider 54 is constituted by two sides 58 fixed to a wall 59 and in which a recess 60 is defined halfway along their vertical extension.

A working unit is fixed at the recess 60 between the sides 58; said unit comprises a drive unit 61 driving a machining head 62 which is provided with a rotary tool 63 rotating about an axis B parallel to direction X.

The drive unit 61 is similar to the units 12 and 42 and extends between the sides 58 of the slider 54 through an opening in the front wall 49 which is vertically elongated to allow the vertical movement of the slider 54.

Two further working units are mounted at the upper and lower ends of the slider 54; each one comprises a support, respectively 64 and 65, fixed in a front position respectively to the top and to the base of the slider 54; each support supporting a respective machining head 66, 67 with a rotary tool 68, 69. The rotary tools 68, 69 can rotate about a common vertical axis C parallel to direction Z and are actuated by respective drive units 70, 71 similar to the drive unit 61.

The tools 68 and 69 are orientated towards each other, so that they are arranged above and below the workpiece-holder clamps 3.

The operation of the transfer machine is evident from the description given. Particularly, by actuating the slider 10 by means of the drive unit 12 it is possible to actuate the slider 10 backwards and forwards along direction X and thus, while keeping the sliders 34 and 54 fixed, perform the tool advancement and return strokes in direction B with respect to the workpiece arranged in the clamp 3.

When the tool 63 is arranged outside the workpiece, by actuating the drive unit 55 it is possible to raise and lower the slider 54 so as to alternatively insert the tools 67 and 68 in the workpiece along direction C.

Naturally, when the tools 63, 68 and 69 are arranged outside the workpiece, it is possible to perform lateral movements of said tools with respect to the workpiece in direction Y by actuating the drive unit 42, so as to move the slider 34 along the guides 30.

A substantial advantage of the transfer machine according to the invention is constituted by the fact that since the machining units can move with three degrees of freedom and are controlled electronically, they can perform any positioning operation rapidly and accurately.

From a constructive point of view, the arrangement of the sliders 10, 34 and 54 allows a reduced angular bulk. In this manner it is possible, as clearly shown in figure 2, to arrange several machining units 4 radially around the workpiece-holder turret 2.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Machining unit, characterized in that it comprises: a first slider (10), guided on a base (1, 5) in a horizontal direction X; a second slider (34), guided on said first slider (10) in a horizontal direction Y which is orthogonal to said direction X; and a third slider (54), guided on said second slider (34) in a vertical direction Z which is orthogonal to said directions X and Y; means (49, 64, 65) for mounting tools (63, 68, 69) on said third slider (54) and means (12, 42, 55) for positioning said sliders (10, 34, 54) and causing the advancement of said tools (63, 68, 69) along said directions X, Y and Z during operating steps.

2. Machining unit according to claim 1, characterized in that said third slider (54) comprises three working units (61, 70, 71), each of which comprises a rotary tool (63, 68, 69) actuated by a drive unit; one (63) of said tools can rotate about a horizontal axis (B) parallel to said direction X, and the other two tools (68, 69) are aligned along a vertical axis (C) parallel to said direction Z and are arranged mutually opposite above and below said horizontal rotation axis.

3. Machining unit according to one of claims 1 and 2, characterized in that said means (12, 42, 55) for the positioning and advancement of the sliders (10, 34, 54) comprise a threaded rod (17, 35, 56) which is actuated by an associated drive unit (12, 42, 55) and is rotatably supported on a plate (5) fixed to the base (1) and on each slider (10, 34), said threaded rods engaging respective nut threads (21, 40, 57) which are rigidly coupled to the respective sliders (10, 34, 54).

4. Transfer machine incorporating machining units according to claims 1 to 3, characterized in that it comprises a plurality of machining units (4) arranged radially with respect to a workpiece-holder turret (2) which can rotate about a vertical axis (A).
